# EUROPÄISCHE PATENTSCHRIFT

(11) **EP 3 206 989 B1**
(45) Veröffentlichungstag und Bekanntmachung des Hinweises auf die Patenterteilung: **21.03.2018**
(21) Anmeldenummer: 16785470.2
(22) Anmeldetag: 24.10.2016
(51) Int. Cl.: C01B 33/023

(54) **VERFAHREN ZUR HERSTELLUNG VON SILICIUM MITTELS MAGNESIOTHERMISCHER REDUKTION**
METHOD FOR PRODUCING SILICON BY MEANS OF MAGNESIOTHERMAL REDUCTION
PROCÉDÉS DE FABRICATION DE SILICIUM PAR RÉDUCTION MAGNÉSIOTHERMIQUE

(30) Priorität: 29.10.2015 DE 102015221226
(43) Veröffentlichungstag der Anmeldung: 23.08.2017
(73) Patentinhaber: Wacker Chemie AG, 81737 München (DE)
(72) Erfinder: GIGLER, Peter, 85221 Dachau (DE); STOHRER, Jürgen, 82049 Pullach (DE)
(74) Vertreter: Ege, Markus
(86) Internationale Anmeldenummer: PCT/EP2016/075501
(87) Internationale Veröffentlichungsnummer: WO 2017/072064

(56) Entgegenhaltungen:
- WO-A1-2012/114126
- WO-A2-2008/067391
- US-A1- 2009 092 899

## Beschreibung

Die Erfindung betrifft Verfahren zur Herstellung von Silicium mittels magnesiothermischer Reduktion von Siliciumdioxid.

Silicium enthaltende Produkte sind in der gegenwärtigen Produktwelt, insbesondere im elektronischen Bereich, allgegenwärtig, wie beispielsweise in Halbleitern, Lithium-Ionen-Batterien oder Solarzellen. Deswegen besteht ein steter Bedarf, Verfahren zur Herstellung von Silicium weiter zu verbessern. Eine etablierte chemische Methode zur Gewinnung von Silicium ist die Reduktion von Siliciumdioxid mit Magnesium (magnesiothermische Reduktion), die durch folgendes Reaktionsschema veranschaulicht wird:

SiO₂ + 2 Mg --> 2 MgO + Si

Als Nebenprodukte werden bei der magnesiothermischen Reduktion im Allgemeinen erhebliche Mengen an beispielsweise Magnesiumsilicat oder Magnesiumsilicid gebildet.

Die magnesiothermische Reduktion wurde erstmals 1889 von Gattermann in "Ber. Deut. Chem. Ges. 1889, 22, 186" beschrieben. Darin kommt bereits die enorme Reaktionsenthalpie ΔH der Reaktion (ΔH = -293 kJ/mol) zum Ausdruck. Um den Reaktionsverlauf kontrollierbar zu halten, empfiehlt das "Lehrbuch der Anorganischen Chemie von Holleman und Wiberg (1995, 101. Auflage, Seite 877)" die Zugabe von Magnesiumoxid als Moderator. Die WO 2008/ 067391 A2 empfiehlt zu diesem Zweck, den Reaktor zu kühlen oder Inertmaterialien zuzusetzen, wie beispielsweise Metall(oxide) oder Metallsalze von beispielsweise Chloriden, Sulfiden oder Nitraten. Hervorgehobene Inertmaterialien sind Natriumchlorid oder alternativ Magnesiumoxid, die beispielsweise in einem Anteil von 72 Gew.-% (MgO) bzw. 65 Gew.-% (NaCl) an der Ausgangsmischung eingesetzt werden. Die Reduktion erfolgt diskontinuierlich. Die WO 2011/042742 A1 empfiehlt Natriumchlorid oder alternativ Calciumchlorid als Moderatoren für die Reduktion von SiO₂ mit Magnesium. Die WO 2008/067391 A2 offenbart ein magnesiothermisches Verfahren zur Herstellung von Silicium, bei dem eine Mischung aus SiO₂, Mg und MgO eingesetzt wird. US 2009/092899 A1 und WO 2012/114126 A1 offenbaren alternative, magnesiothermische Verfahren zur Herstellung von Silicium vor. Es sind aber auch eine Vielzahl von Verfahren für die magnesiothermische Reduktion bekannt, die ohne Moderatorzusatz arbeiten. So beschreibt die US 7615206 B2 eine diskontinuierlich durchgeführte magnesiothermische Reduktion ohne Moderatoren. Hierbei befasst sich die US 7615206 insbesondere mit der Darstellung von Silicium mit speziellen nano- bis mikroskaligen Strukturen durch strukturerhaltende Umsetzung einer nano- bis mikroskaligen Silica-Ausgangsstruktur, wie beispielsweise Diatomeenerde. Dem liegt die Beobachtung zugrunde, dass die Reduktion von Siliciumdioxid mit Magnesium unter Strukturerhalt verläuft, wie in "Nature 2007, 446, 172" diskutiert. Durch die magnesiothermische Reduktion von SiO₂ lassen sich also unter Strukturerhalt definierte Silicium-Strukturen erzeugen. Weitere nicht-moderierte Varianten der magnesiothermischen Reduktion sind auch in der WO 10139346 A1, WO 2013179068 A2, KR 100493960, TWI 287890B und WO 2013/ 147958 A2 beschrieben. Die US 8268481 BB beschreibt Verfahren zur Herstellung von Silicium durch Reduktion von pyrogener Kieselsäure mit metallischen Reduktionsmitteln, wie beispielsweise Magnesium oder Aluminium. Zur Aktivierung der metallischen Reduktionsmittel wird der Zusatz von Flussmitteln oder Lösungsmitteln und zur Kontrolle der Reaktionstemperatur wird der Einsatz von stark wärmeleitenden Metallen, wie Kupfer oder Messing, empfohlen. Es sind diskontinuierliche Verfahren beschrieben.
Vor diesem Hintergrund bestand bei der magnesiothermischen Reduktion von SiO₂ weiterhin eine Herausforderung darin, die große, schlagartig frei werdende Reaktionswärme zu kontrollieren.

Dies stellt insbesondere bei Durchführung der Umsetzung im industriellen Maßstab ein gravierendes Problem dar. Durch den Zusatz von Moderatoren, wie Natriumchlorid, kann die Reaktionswärme zwar abgefangen werden, aber für deren Abtrennung aus dem Reaktionsgemisch ist ein zusätzlicher Aufwand erforderlich, wie beispielsweise ein weiterer Waschschritt, was einen Extraaufwand darstellt und zudem weitere Abfallmengen generiert, die aufwändig entsorgt oder recycled werden müssen, was wirtschaftlich negativ zu Buche schlägt.

Es bestand daher die Aufgabe, die magnesiothermische Reduktion von Siliciumdioxid so zu modifizieren, dass die Reaktionstemperatur kontrolliert und zugleich der Aufwand zur Abtrennung von Moderatoren reduziert werden kann. Nach Möglichkeit sollte zudem die Ausbeute an Silicium erhöht beziehungsweise der Umfang der Bildung von Nebenprodukten, insbesondere von Magnesiumsilicat, reduziert werden.

Überraschenderweise wurde die Aufgabe dadurch gelöst, dass den Edukten der magnesiothermischen Reduktion als Moderator Magnesiumoxid und zudem Silicium zugesetzt wurde. Den Edukten wurden also Moderatoren zugesetzt, die als Produkte der magnesiothermischen Reduktion erhältlich sind.

Gegenstand der Erfindung sind Verfahren zur Herstellung von Silicium mittels magnesiothermischer Reduktion von Siliciumdioxid, dadurch gekennzeichnet, dass
zur magnesiothermischen Reduktion eine Mischung (Eduktgemisch) eingesetzt wird umfassend Siliciumdioxid (SiO₂), Magnesium (Mg) und als Moderatoren Magnesiumoxid (MgO) und Silicium (Si) und gegebenenfalls weitere Moderatoren.

Das Siliciumdioxid kann in amorpher oder kristalliner Form vorliegen. Es kann synthetischen oder natürlichen Ursprungs sein. Beispiele für Siliciumdioxid sind pyrogene Kieselsäure, Fällungskieselsäure, Quarz, Tridymit, Christobalit Diatomeenerde oder in Form von Silicaten gebundenes SiO₂, wie Forsterit oder Enstatit. Bevorzugt sind synthetische, amorphe Kieselsäuren, besonders bevorzugt ist pyrogene Kieselsäure.

Die volumengewichtete Partikelgrößenverteilung D₅₀ der SiO₂-Partikel beträgt beispielsweise 10 nm bis 500 µm, bevorzugt 100 nm bis 100 µm und besonders bevorzugt 500 nm bis 50 µm (Bestimmungsmethode: statische Lichtstreuung, Messgerät Horiba LA 950, Wasser als Dispergiermedium).

Die spezifische Oberfläche (BET) des SiO₂ beträgt beispielsweise 1 bis 500 m²/g, bevorzugt 10 bis 300 m²/g und besonders bevorzugt 15 bis 200 m²/g (bestimmt gemäß DIN 66131 (mit Stickstoff), beispielsweise mit dem Messgerät Sorptomatic 1990 der Firma Porotec).

Magnesium kann beispielsweise in Form von Draht, vorzugsweise in Form von Spänen und besonders bevorzugt in Form von Pulver eingesetzt werden. Die Partikelgröße des Magnesiums beträgt beispielsweise 1 µm bis 1 mm, bevorzugt 5 µm bis 500 µm und besonders bevorzugt 10 µm bis 200 µm.

Das stöchiometrische Verhältnis von Siliciumdioxid zu Magnesium (SiO_{2/}Mg) im Eduktgemisch beträgt vorzugsweise 0,3 bis 1, besonders bevorzugt 0,4 bis 0,7 und am meisten bevorzugt 0,4 bis 0,6.

Das Silicium und das Magnesiumoxid und etwaige weitere Moderatoren, die im Eduktgemisch enthalten sind, werden im Folgenden auch gemeinsam als Moderatoren bezeichnet.

Gegebenenfalls können weitere Moderatoren eingesetzt werden, wie beispielsweise Magnesiumsilicat. Beispiele für weitere Moderatoren sind (Erd)Alkali-Halogenide, wie Natriumchlorid oder Calciumchlorid.

Das Eduktgemisch enthält vorzugsweise 45 bis 95 Gew.-%, besonders bevorzugt 50 bis 93 Gew.-% und am meisten bevorzugt 55 bis 90 Gew.-% Magnesiumoxid, bezogen auf das Gesamtgewicht der Moderatoren. Das Eduktgemisch enthält vorzugsweise 3 bis 40 Gew.-%, besonders bevorzugt 4 bis 35 Gew.-% und am meisten bevorzugt 5 bis 30 Gew.-% Silicium, bezogen auf das Gesamtgewicht der Moderatoren. Etwaige weitere Moderatoren sind im Eduktgemisch beispielsweise zu 0 bis 40 Gew.-% und bevorzugt 0 bis 20 Gew.-% enthalten, bezogen auf das Gesamtgewicht der Moderatoren.

Bevorzugt handelt es sich bei Moderatoren um ein Gemisch, das durch eine magnesiothermische Reduktion von SiO₂ erhalten wird, insbesondere einer erfindungsgemäßen magnesiothermischen Reduktion von SiO₂. Ein solches Gemisch kann beispielsweise Silicium, Magnesiumoxid sowie gegebenenfalls weitere Komponenten, wie Magnesiumsilicat, enthalten. Dem Gemisch können zusätzlich Moderatoren zugesetzt werden.

Siliciumdioxid und Magnesium werden im Folgenden gemeinsam auch als Reaktanden bezeichnet.

Das Gewichtsverhältnis der Reaktanden zu den Moderatoren umfassend Silicium und Magnesiumoxid beträgt vorzugsweise 0,05 bis 1, besonders bevorzugt 0,2 bis 0,7 und am meisten bevorzugt 0,3 bis 0,6.

Das Eduktgemisch kann weitere optionale Bestandteile enthalten, beispielsweise Dotiermittel, wie Dibortrioxid. Im Zuge der magnesiothermischen Reduktion kann beispielsweise Dibortrioxid zu elementarem Bor reduziert werden und dem resultierenden Silicium als Dotiermittel dienen. Der Anteil der optionalen Bestandteile beträgt beispielsweise bis zu 5 Gew.-%, vorzugsweise 1 ppb (parts per billion) bis 5 Gew.-%, bezogen auf das Gesamtgewicht der Eduktmischungen.

Zur Herstellung des Eduktgemisches können deren Bestandteile in an sich beliebiger Reihenfolge gemischt werden. Das Siliciumdioxid und das Magnesium können separat oder vorzugsweise in Form einer Mischung eingesetzt werden. Auch die Moderatoren können separat oder vorzugsweise in Form einer Mischung zugegeben werden. Besonders bevorzugt werden zwei oder mehr, vorzugsweise alle Moderatoren in Form einer Mischung in das Verfahren eingebracht.

Vorzugsweise werden zuerst die Moderatoren Silicium und Magnesiumoxid und gegebenenfalls ein oder mehrere weitere Moderatoren gemischt und anschließend zu Siliciumdioxid oder Magnesium oder vorzugsweise zu einer Mischung aus Siliciumdioxid und Magnesium gegeben. Vorzugsweise können auch das Siliciumdioxid und Magnesium separat oder vorzugsweise gemeinsam mit einem oder mehreren Moderatoren, insbesondere einer Mischung von zwei oder mehreren oder vorzugsweise allen Moderatoren gemischt werden.

Siliciumdioxid, Magnesium, Magnesiumoxid und Silicium werden also allgemein vor Durchführung der magnesiothermischen Reduktion gemischt, das heißt im Allgemeinen vor Einbringen in den Reaktor gemischt.

Das Mischen erfolgt vorzugsweise bei Umgebungstemperatur, beispielsweise bei Raumtemperatur, besonders bevorzugt bei 15 bis 35°C. Jedenfalls erfolgt das Mischen bei Temperaturen von vorzugsweise < 400°C, mehr bevorzugt ≤ 390°C und besonders bevorzugt ≤ 350°C.

Zum Mischen der Bestandteile der Eduktmischung können die hierfür gängigen Mischer, insbesondere industrielle Mischer Einsatz finden. Beispiele für Mischer sind Freifallmischer, wie Containermischer, Konusmischer, Fassrollmischer, Rhönradmischer, Taumelmischer oder Schub- und Wurfmischer wie Trommelmischer und Schneckenmischer. Weitere Beispiele für geeignete Mischer sind in "Mischen von Feststoffen" von R. Weinekötter und H. Gericke, Springer 1995 angeführt.

Die magnesiothermische Reduktion kann in hierfür gängigen Reaktoren, insbesondere Öfen durchgeführt werden, wie beispielsweise Rohröfen, Drehrohröfen, Kammeröfen, Bandöfen oder Schuböfen. Die Reaktoren können diskontinuierlich oder kontinuierlich betrieben werden. Gegebenenfalls können die Reaktoren auf herkömmliche Weise gekühlt werden. Im Allgemeinen wird der Reaktor aber nicht gekühlt.

Die Eduktgemische können beispielsweise in Form von Pellets, Granulat oder vorzugsweise in Form von Pulverschüttungen in die Reaktoren eingebracht werden.

Die magnesiothermische Reduktion erfolgt vorzugsweise bei 400 bis 1200°C, besonders bevorzugt bei 500 bis 1100°C und am meisten bevorzugt bei 600 bis 1000°C.

Die magnesiothermische Reduktion wird im Allgemeinen thermisch, das heißt durch Erwärmung der Eduktmischung auf eine Temperatur innerhalb des vorgenannten Temperaturbereichs gestartet.

Der Druck im Rektor beträgt vorzugsweise 0,5 bis 10 bar_{abs.}, besonders bevorzugt zwischen 0,7 bis 5 bar_{abs.} und am meisten bevorzugt zwischen 0,8 bis 1,5 bar_{abs.}.

Die magnesiothermische Reduktion wird vorzugsweise unter einer Schutzgasatmosphäre, insbesondere unter Argon-Atmosphäre oder einer Argon/Wasserstoff-Atmosphäre, insbesondere mit einem Wasserstoffanteil von ≤ 5 Vol.-%, durchgeführt.

Die Verweilzeit des Eduktgemisches im Reaktor beträgt vorzugsweise 1 Sekunde bis 12 Stunden, besonders bevorzugt 1 Sekunde bis 6 Stunden und am meisten bevorzugt 1 Sekunde bis 3 Stunden.

Das den Reaktor verlassende Gemisch (Produktgemisch) enthält im Allgemeinen Silicium, Magnesiumoxid und gegebenenfalls ein oder mehrere weitere Bestandteile, wie Magnesiumsilicat, Magnesiumsilicid oder gegebenenfalls Bor. Des Weiteren können auch nicht umgesetzte Edukte enthalten sein, wie Magnesium, Siliciumdioxid oder gegebenenfalls Dibortrioxid.

Das Produktgemisch enthält vorzugsweise 3 bis 40 Gew.-%, besonders bevorzugt 4 bis 35 Gew.-% und am meisten bevorzugt 5 bis 30 Gew.-% Silicium, vorzugsweise 45 bis 95 Gew.-%, besonders bevorzugt 50 bis 93 Gew.-% und am meisten bevorzugt 55 bis 90 Gew.-% Magnesiumoxid, vorzugsweise 0 bis 40 Gew.-%, besonders bevorzugt 0 bis 30 Gew.-% und am meisten bevorzugt 0 bis 20 Gew.-% weitere Bestandteile, wobei sich die Angaben in Gew.-% je auf das Gesamtgewicht des Produktgemisches beziehen und sich für jedes Produktgemisch auf 100 Gew.-% addieren.

Die magnesiothermische Reduktion kann als Batch-Prozess oder vorzugsweise als Kreisprozess ausgestaltet sein. Bei einem Batch-Prozess durchläuft der Massestrom den Reaktor wie üblich nur einmal. Bei einem Kreisprozess wird das Produktgemisch ganz oder vorzugsweise teilweise wieder in den Reaktor eingebracht (Kreisgemisch).Vorzugsweise wird das Kreisgemisch mit Reaktanden und gegebenenfalls einem oder mehreren Moderatoren gemischt und anschließend in den Reaktor eingebracht. Der gegebenenfalls verbleibende Teil des Produktgemisches kann beispielsweise seiner Verwertung, insbesondere der Aufarbeitung zugeführt werden.

Das Kreisgemisch beträgt vorzugsweise 50 bis 95 Gew.-%, besonders bevorzugt 55 bis 85 Gew.-% und am meisten bevorzugt 60 bis 75 Gew.-%, bezogen auf das Gesamtgewicht des jeweiligen Produktgemisches. Die Zusammensetzung des Kreisgemisches ist im Allgemeinen identisch wie die vorgenannte Zusammensetzung des Produktgemisches.

In einer bevorzugten Ausführungsform fungiert also das Kreisgemisch als Moderator.

Während des Betriebs des Kreisprozesses beträgt der Anteil des Kreisgemisches an der Gesamtmenge der zum jeweiligen Verfahrenszeitpunkt insgesamt eingesetzten Menge an Moderatoren vorzugsweise 70 bis 100 Gew.-%, besonders bevorzugt 80 bis 100 Gew.-% und am meisten bevorzugt 90 bis 100 Gew.-%. Am meisten bevorzugt wird während des Betriebs des Kreisprozesses ausschließlich Kreisgemisch als Moderator eingesetzt. Während des Betriebs des Kreisprozesses wird den Reaktanden neben dem Kreisgemisch vorzugsweise kein weiteres Silicium und/oder kein weiteres Magnesiumoxid zugegeben.

In einer bevorzugten Ausführungsform werden also nur während des Anfahrens des Kreisprozesses Moderatoren von außerhalb in das Verfahren eingebracht beziehungsweise mit den Reaktanden gemischt. Das Anfahren des Kreisprozesses bezeichnet, wie allgemein bekannt, den Verfahrenszeitraum vom Start des Verfahrens bis zu dem Zeitpunkt, an dem der Kreisprozess in die kontinuierliche Betriebsweise übergeht, beziehungsweise an dem Produktgemisch mit Reaktanden gemischt in den Reaktor eingebracht wird.

Das Kreisgemisch wird vorzugsweise auf eine Temperatur von < 400°C, besonders bevorzugt ≤ 390°C und am meisten bevorzugt ≤ 350°C abgekühlt. Das Kühlen kann auf herkömmliche Weise, aktiv oder passiv erfolgen, wie beispielsweise durch Wasserkühlung oder Luftkühlung. Es wird, wie üblich, extern gekühlt. Externes Kühlen bedeutet, dass das Kühlmedium nicht in Kontakt mit dem Kreisgemisch kommt, sondern eine Vorrichtung kühlt, beispielsweise Rohrleitungen oder sonstige herkömmliche Kühlvorrichtungen, durch die Kreisgemisch geführt wird oder die Kreisgemisch enthalten.

Die Aufarbeitung von Produktgemischen kann beispielsweise durch Zugabe von einer oder mehreren Säure erfolgen. Beispiele für Säuren sind Halogenwasserstoffsäuren, wie Salzsäure oder Flusssäure, Carbonsäuren, wie Essigsäure, oder Sauerstoffsäuren des Phosphors, wie Phosphorsäure. Bevorzugt sind Essigsäure oder Salzsäure. Bei Einsatz von mehreren Säuren können diese als Mischung oder vorzugsweise nacheinander eingesetzt werden. Die Aufarbeitung kann also auch zweistufig mit verschiedenen Säuren erfolgen, beispielsweise durch eine erste Säurebehandlung mit Salzsäure und einer zweiten Behandlung mit Flusssäure.

Die Säuren werden vorzugsweise in Form von wässrigen Lösungen eingesetzt. Die Konzentration der eingesetzten Säuren beträgt vorzugsweise 0,01 bis 10 mol/L, bevorzugt 0,1 bis 8 mol/L, besonders bevorzugt 1 bis 5 mol/L.

Das molare Verhältnis der Protonen der Säuren zum Magnesiumoxid der aufzuarbeitenden Produktmischung beträgt vorzugsweise mindestens 2 zu 1.

Abschließend kann das so erhaltene Silicium getrocknet werden, beispielsweise bei Temperaturen von 0°C bis 200°C, bevorzugt bei 20°C bis 150°C und besonders bevorzugt bei 40°C bis 100°C. Der Druck beim Trocknen beträgt vorzugsweise 0,01 bis 1 bar_{abs.} und bevorzugt 0,1 bis 0,5 bar_{abs.}.

Das Produkt enthält vorzugsweise 50 bis 100 Gew.-%, besonders bevorzugt 60 bis 100 Gew.-% und am meisten bevorzugt 70 bis 100 Gew.-% Silicium, bezogen auf das Gesamtgewicht des Produkts.

Das erfindungsgemäß hergestellte Silicium kann in sämtliche gängigen Anwendungen für Silicium einfließen, beispielsweise in elektronische Anwendungen. Besonders hervorgehoben seien hierbei Halbleiter, Solarzellen, thermoelektrische Generatoren und insbesondere als Aktivmaterial für Lithium-Ionen-Batterien.

Mit der vorliegenden Erfindung wurde gefunden, dass durch den Zusatz von Silicium und Magnesiumoxid als Moderator zu Siliciumdioxid und Magnesium die Reaktionswärme der magnesiothermischen Reduktion und damit der Prozess gesteuert werden kann. Überraschenderweise führt der Einsatz der erfindungsgemäßen Moderatoren zu höheren Silicium-Ausbeuten. Die Bildung des Nebenprodukts Magnesiumsilicat konnte erfreulicherweise zurückgedrängt werden.

Besonders vorteilhaft ist die Durchführung des erfindungsgemäßen Verfahrens als Kreisprozess. Hierbei kann beispielsweise ein Teil des bei der magnesiothermischen Reduktion anfallenden Produktgemisches als erfindungsgemäße Moderator-Mischung für die erfindungsgemäße magnesiothermische Reduktion verwendet werden. In diesem Fall wird vorteilhafterweise kein zusätzliches Moderatormaterial von außen in das Verfahren eingebracht, das in der Folge zusätzlich abgetrennt werden müsste oder eine Quelle für Verunreinigung darstellt. Ein Teil des Produktgemisches kann also zum erneuten Einsatz als Moderator zurückgeführt werden, während der andere Teil der Produktaufbereitung zugeführt werden kann. Dies steigert die Wirtschaftlichkeit der erfindungsgemäßen magnesiothermischen Reduktion.

Die nachfolgenden Beispiele dienen zur weiteren Erläuterung der Erfindung:
In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C. Die angegebenem Elementgehalte (Mg, Si) wurden mittels ICP (inductively coupled plasma)-Emissionspektrometrie (Messgerät: Optima 7300 DV, Fa. Perkin Elmer) bestimmt. Der Sauerstoffgehalt wurde aus der Differenz zu 100% berechnet.

Die Berechnung der Produktzusammensetzungen erfolgte ausgehend von den Elementgehalten (Si, O, Mg) unter der, über XRD nachweislich erfüllten Randbedingung, dass Magnesiumoxid bei der wässrigen Aufarbeitung vollständig entfernt wurde und das isolierte Produkt aus Si(0), Mg₂SiO₄ und SiO₂ zusammengesetzt war. Über den Mg-Gehalt des isolierten Produktes wurde der Magnesiumsilicat-Gehalt und in der Folge der Si0₂- und Si(0)-Gehalt des das isolierten Produkts errechnet. Der vor der wässrigen Aufarbeitung vorhandene Anteil an MgO wurde über die gelöste Menge an Magnesium im Filtrat der Waschlösung bestimmt.

### Vergleichsbeispiel 1:

Batch-Prozess, Mg-thermische Reduktion mit MgO als Moderator: 1,00 g Siliciumdioxid (WACKER HDK® V15) und 0,81 g Magnesiumpulver (Alfa Aesar, Art.Nr. 10233, 325 mesh, 99.8%) wurden mit 4,20 g Magnesiumoxid (Sigma-Aldrich, Art.Nr. 342793, ≥99% trace metals basis, -325 mesh) mit Mörser und Pistill vermengt und anschließend in einer Stahlampulle in einem mit Argon inertisierten Rohrofen 2 h auf 900°C (Heizrate 10°C/min) erhitzt und anschließend abgekühlt.

5,75 g des erhaltenen Produktgemisches mit einer Zusammensetzung von 5,0 Gew.-% Si(0), 87,4 Gew.-% MgO, 6,0 Gew.-% Mg₂SiO₄, 1,6 Gew.-% SiO₂ wurden unter Eisbadkühlung zu 120 g Essigsäure (20 Gew.-% in Wasser) gegeben und 3 h gerührt. Die erhaltene Suspension wurde filtriert, mit Wasser gewaschen (Papierfilter Porengröße 4-7 µm; 4,95 g MgO im Filtrat gelöst) und der Rückstand bei 55°C (2 mbar abs.) 20h getrocknet. Dabei wurden 0,71 g Produkt der elementaren Zusammensetzung 55,0 Gew.-% Si, 16,5 Gew.-% Mg und 28,5 Gew.-% O erhalten. Dies entspricht 39,5 Gew.-% Si(0), 47,8 Gew.-% Mg₂SiO₄, 12,7 Gew.-% SiO₂ und damit einer molaren Ausbeute an Si(0) von 63% bezogen auf die, in Form von SiO₂ eingesetzte Menge Silicium.

### Beispiel 2:

Batch-Prozess, Mg-thermische Reduktion mit einem Moderatorengemisch enthaltend Si und MgO:
1,16 g Siliciumdioxid (WACKER HDK® V15) und 0,94 g Magnesiumpulver (Alfa Aesar, Art.Nr. 10233, 325 mesh, 99.8%) wurden mit einer Moderatormischung bestehend aus 3,28 g Magnesiumoxid, 1,03 g Silicium, 0,29 g Magnesiumsilicat und 0,29 g Siliciumdioxid mit Mörser und Pistill vermengt und anschließend in einer Stahlampulle in einem mit Argon inertisierten Rohrofen 2 h auf 900°C (Heizrate 10°C/min) erhitzt und anschließend abgekühlt. 3,47 g des erhaltenen Produktgemisches mit einer Zusammensetzung von 19,8 Gew.-% Si(0), 68,1 Gew.-% MgO, 9,2 Gew.-% Mg₂SiO₄, 2,9 Gew.-% SiO₂ wurden unter Eisbadkühlung zu 56 g Essigsäure (20 Gew.-% in Wasser) gegeben und 3 h gerührt. Die erhaltene Suspension wurde filtriert, mit Wasser gewaschen (Papierfilter Porengröße 4-7 µm; 2,39 g MgO im Filtrat gelöst) und der Rückstand bei 55°C (2 mbar abs.) 20h getrocknet. Dabei wurden 1,12 g Produkt der elementaren Zusammensetzung 72 Gew.-% Si, 10 Gew.-% Mg und 18 Gew.-% 0 erhalten. Dies entspricht 62,0 Gew.-% Si(0), 28,9 Gew.-% Mg₂SiO₄, 9,1 Gew.-% SiO₂. Die eingebrachten Anteile der Moderatormischung herausgerechnet, ergibt sich eine molare Ausbeute an Si(0) von 68% bezogen auf die, in Form von SiO₂ eingesetzte Menge Silicium.

Im Vergleich mit Vergleichsbeispiel 1 führt der Einsatz des erfindungsgemäßen Moderators zu einer erhöhten Ausbeute an elementarem Silicium.

| | |
|---|---|
| Vergleichsbeispiel 1 | 63% Si(0)-Ausbeute |
| Beispiel 2 | 68% Si(0)-Ausbeute |

### Vergleichsbeispiel 3:

Mg-thermische Reduktion mit MgO als Moderator (Start Kreisprozess) :
16,6 g Siliciumdioxid (WACKER HDK® V15) und 13,4 g Magnesiumpulver (Alfa Aesar, Art.Nr. 10233, 325 mesh, 99.8%) wurden mit 70 g Magnesiumoxid (Sigma-Aldrich, Art.Nr. 63090, ≥97.0% based on calcined substance, KT) in einer Kugelmühle 1h vermischt und anschließend in einer mit Argon inertisierten Stahlampulle in einem Muffelofen 4,5 h auf 1000°C erhitzt und anschließend abgekühlt.

18,6 g des erhaltenen Produktgemisches (4,4 Gew.-% Si(0), 90,3 Gew.-% MgO, 3,2 Gew.-% Mg₂SiO₄, 2,1 Gew.-% SiO₂) wurden unter Eisbadkühlung zu 409 g Essigsäure (20 Gew.-% in Wasser) gegeben und 4 h gerührt. Die erhaltene Suspension wurde filtriert, mit Wasser gewaschen (Papierfilter Porengröße 4-7 µm; 16,8 g MgO im Filtrat gelöst) und der Rückstand bei 55°C (2 mbar abs.) 20 h getrocknet. Dabei wurden 1,80 g Produkt der elementaren Zusammensetzung 62 Gew.-% Si, 11,5 Gew.-% Mg und 26,5 Gew.-% O erhalten. Dies entspricht der Zusammensetzung 45,4 Gew.-% Si(0), 33,3 Gew.-% Mg₂SiO₄, 21,3 Gew.-% SiO₂ und damit eine molare Ausbeute an Si(0) von 57% bezogen auf die, in Form von SiO₂ eingesetzte Menge Silicium.

### Beispiel 4:

Kreisprozess, Mg-thermische Reduktion mit einem Moderatorengemisch enthaltend Si und MgO:
16,6 g Siliciumdioxid (WACKER HDK® V15) und 13,4 g Magnesiumpulver (Alfa Aesar, Art.Nr. 10233, 325 mesh, 99.8%) wurden mit 70 g Moderator (Produktgemisch aus Vergleichsbeispiel 3) in einer Kugelmühle 1h vermischt und anschließend in einer mit Argon inertisierten Stahlampulle in einem Muffelofen 4,5 h auf 1000°C erhitzt und anschließend abgekühlt.

Das dort erhaltene Gemisch wurde nach gleicher Prozedur erneut als Moderator eingesetzt, ebenso wie das daraus wiederum resultierende Produktgemisch.

14,6 g des somit erhaltenen Produktgemisches (14,5 Gew.-% Si, 72,8 Gew.-% MgO, 6,7 Gew.-% Mg₂SiO₄, 6,0 Gew.-% SiO₂) wurden unter Eisbadkühlung zu 294 g Essigsäure (20 Gew.-% in Wasser) gegeben und 4 h gerührt. Die erhaltene Suspension wurde filtriert (Papierfilter Porengröße 4-7 µm; 10,6 g MgO im Filtrat gelöst)und der Rückstand bei 55°C (2 mbar abs.) 20h getrocknet. Dabei wurden 3,95 g Produkt der elementaren Zusammensetzung 68,5 Gew.-% Si, 8,5 Gew.-% Mg und 23 Gew.-% O erhalten. Dies entspricht 53,2 Gew.-% Si(0), 24,6 Gew.-% Mg₂SiO₄, 22,2 Gew.-% SiO₂.

Der Vergleich der Produktzusammensetzungen von Vergleichsbeispiel 3 und Beispiel 4 zeigt, dass durch die erfindungsgemäße Vorgehensweise auch bei dem ökonomisch und technologisch vorteilhaften Kreisprozess die Ausbeute an Silicium (Si(0)) gesteigert und die Bildung des Nebenprodukts Mg₂SiO₄ zurückgedrängt wurde.

| | |
|---|---|
| Vergleichsbeispiel 3 | 45,4 Gew.-% Si(0), |
| | 33,3 Gew.-% Mg₂SiO₄, |
| | 21,3 Gew.-% SiO₂ |
| Beispiel 4 | 53,2 Gew.-% Si(0), |
| | 24,6 Gew.-% Mg₂SiO₄, |
| | 22,2 Gew.-% SiO₂ |

## Patentansprüche

1. Verfahren zur Herstellung von Silicium mittels magnesiothermischer Reduktion von Siliciumdioxid, **dadurch gekennzeichnet, dass**
zur magnesiothermischen Reduktion ein Eduktgemisch eingesetzt wird umfassend Siliciumdioxid, Magnesium und als Moderatoren Magnesiumoxid und Silicium und gegebenenfalls ein oder mehrere weitere Moderatoren.

2. Verfahren zur Herstellung von Silicium nach Anspruch 1, **dadurch gekennzeichnet, dass** das Eduktgemisch 45 bis 95 Gew.-% Magnesiumoxid enthält, bezogen auf das Gesamtgewicht der Moderatoren.

3. Verfahren zur Herstellung von Silicium nach Anspruch 1 oder 2, **dadurch gekennzeichnet, dass** das Eduktgemisch 5 bis 55 Gew.-% Silicium enthält, bezogen auf das Gesamtgewicht der Moderatoren.

4. Verfahren zur Herstellung von Silicium nach Anspruch 1 bis 3, **dadurch gekennzeichnet, dass** als Moderatoren zumindest anteilig ein Gemisch eingesetzt wird, das durch eine magnesiothermische Reduktion von Siliciumdioxid erhalten wird.

5. Verfahren zur Herstellung von Silicium nach Anspruch 1 bis 4, **dadurch gekennzeichnet, dass** das Gewichtsverhältnis von Siliciumdioxid und Magnesium zu den Moderatoren 0,05 bis 1 beträgt.

6. Verfahren zur Herstellung von Silicium nach Anspruch 1 bis 5, **dadurch gekennzeichnet, dass** das durch die magnesiothermische Reduktion erhaltene Produktgemisch 3 bis 40 Gew.-% Silicium, 45 bis 95 Gew.-% Magnesiumoxid und gegebenenfalls 0 bis 40 Gew.-% weitere Bestandteile enthält, wobei sich die Angaben in Gew.-% je auf das Gesamtgewicht des Produktgemisches beziehen und sich für jedes Produktgemisch auf 100 Gew.-% addieren.

7. Verfahren zur Herstellung von Silicium nach Anspruch 1 bis 6, **dadurch gekennzeichnet, dass** die magnesiothermische Reduktion als Batch-Prozess oder als Kreisprozess ausgestaltet ist.

8. Verfahren zur Herstellung von Silicium nach Anspruch 7, **dadurch gekennzeichnet, dass** das beim Kreisprozess erhaltene Produktgemisch ganz oder teilweise in das Eduktgemisch eingebracht wird.

9. Verfahren zur Herstellung von Silicium nach Anspruch 8, **dadurch gekennzeichnet, dass** 50 bis 95 Gew.-% des beim Kreisprozess erhaltenen Produktgemischs als Moderator in das Eduktgemisch eingebracht wird.

10. Verfahren zur Herstellung von Silicium nach Anspruch 8 oder 9, **dadurch gekennzeichnet, dass** 70 bis 100 Gew.-% der Moderatoren in Form des Produktgemischs eingesetzt werden.

## Claims

1. Process for producing silicon by magnesiothermic reduction of silicon dioxide, **characterized in that** to achieve magnesiothermic reduction a reactant mixture is employed which comprises silicon dioxide, magnesium and, as moderators, magnesium oxide and silicon and optionally one or more further moderators.

2. Process for producing silicon according to Claim 1, **characterized in that** the reactant mixture comprises 45 to 95 wt% of magnesium oxide based on the total weight of the moderators.

3. Process for producing silicon according to Claim 1 or 2, **characterized in that** the reactant mixture comprises 5 to 55 wt% of silicon based on the total weight of the moderators.

4. Process for producing silicon according to Claims 1 to 3, wherein a mixture obtained by a magnesiothermic reduction of silicon dioxide is employed as the moderators at least in part.

5. Process for producing silicon according to Claims 1 to 4, **characterized in that** the weight ratio of silicon dioxide and magnesium to the moderators is 0.05 to 1.

6. Process for producing silicon according to Claims 1 to 5, **characterized in that** the product mixture obtained by magnesiothermic reduction comprises 3 to 40 wt% of silicon, 45 to 95 wt% of magnesium oxide and optionally 0 to 40 wt% of further constituents, wherein the reported wt% values are in each case based on the total weight of the product mixture and for each product mixture sum to 100 wt%.

7. Process for producing silicon according to Claims 1 to 6, **characterized in that** the magnesiothermic reduction is configured as a batch process or as a recycle process.

8. Process for producing silicon according to Claim 7, **characterized in that** the product mixture obtained in the recycle process is fully or partly introduced into the reactant mixture.

9. Process for producing silicon according to Claim 8, **characterized in that** 50 to 95 wt% of the product mixture obtained in the recycle process is introduced into the reactant mixture as moderator.

10. Process for producing silicon according to Claim 8 or 9, **characterized in that** 70 to 100 wt% of the moderators are employed in the form of the product mixture.

## Revendications

1. Procédé de fabrication de silicium par réduction magnésiothermique de dioxyde de silicium, **caractérisé en ce qu'**un mélange de réactifs est utilisé pour la réduction magnésiothermique, comprenant du dioxyde de silicium, du magnésium et, en tant que modérateurs, de l'oxyde de magnésium et du silicium et éventuellement un ou plusieurs autres modérateurs.

2. Procédé de fabrication de silicium selon la revendication 1, **caractérisé en ce que** le mélange de réactifs contient 45 à 95 % en poids d'oxyde de magnésium, par rapport au poids total des modérateurs.

3. Procédé de fabrication de silicium selon la revendication 1 ou 2, **caractérisé en ce que** le mélange de réactifs contient 5 à 55 % en poids de silicium, par rapport au poids total des modérateurs.

4. Procédé de fabrication de silicium selon les revendications 1 à 3, **caractérisé en ce qu'**un mélange qui est obtenu par une réduction magnésiothermique de dioxyde de silicium est utilisé au moins en partie en tant que modérateur.

5. Procédé de fabrication de silicium selon les revendications 1 à 4, **caractérisé en ce que** le rapport en poids entre le dioxyde de silicium et le magnésium et les modérateurs est de 0,05 à 1.

6. Procédé de fabrication de silicium selon les revendications 1 à 5, **caractérisé en ce que** le mélange de produits obtenu par la réduction magnésiothermique contient 3 à 40 % en poids de silicium, 45 à 95 % en poids d'oxyde de magnésium et éventuellement 0 à 40 % en poids d'autres constituants, les données en % en poids se rapportant chacune au poids total du mélange de produits et leur somme étant de 100 % en poids pour chaque mélange de produits.

7. Procédé de fabrication de silicium selon les revendications 1 à 6, **caractérisé en ce que** la réduction magnésiothermique est configurée sous la forme d'un procédé discontinu ou d'un procédé circulaire.

8. Procédé de fabrication de silicium selon la revendication 7, **caractérisé en ce que** le mélange de produits obtenu dans un procédé circulaire est introduit en totalité ou en partie dans le mélange de réactifs.

9. Procédé de fabrication de silicium selon la revendication 8, **caractérisé en ce que** 50 à 95 % en poids du mélange de produits obtenu dans le procédé circulaire est introduit dans le mélange de réactifs en tant que modérateur.

10. Procédé de fabrication de silicium selon la revendications 8 ou 9, **caractérisé en ce que** 70 à 100 % en poids des modérateurs sont utilisés sous la forme du mélange de produits.
